# EUROPEAN PATENT SPECIFICATION

(11) **EP 2 658 666 B1**
(45) Date of publication and mention of the grant of the patent: **19.12.2018**
(21) Application number: 11819028.9
(22) Date of filing: 29.12.2011
(51) Int. Cl.: B22F 1/00, B22F 9/24, C08K 3/08, A23L 3/3436, A23L 3/358, B82Y 30/00, C22C 38/00

(54) **NANOIRON-BASED OXYGEN SCAVENGERS**
SAUERSTOFFFÄNGER AUF NANOIRON-BASIS
ÉLIMINATEURS D'OXYGÈNE À BASE DE NANO-FER

(30) Priority: 30.12.2010 PL 39351110; 30.12.2010 PL 39351210; 22.12.2011 PL 39749911
(43) Date of publication of application: 06.11.2013
(73) Proprietor: Uniwersytet Ekonomiczny W Poznaniu, 60-967 Poznan (PL)
(72) Inventor: FOLTYNOWICZ, Zenon, PL-60-195 Poznan (PL); KOZAK, Wojciech, PL-62-030 Lubon (PL); STOINSKA, Joanna, PL-62-081 Chyby (PL); URBANSKA, Marta, PL-62-070 Dopiewiec (PL); MUC, Karol, PL-61-701 Poznan (PL); KUBLICKA-SWIERKOCZ, Katarzyna, PL-62-081 Przezmierowo (PL); FORYSIAK, Anna, PL-60-682 Poznan (PL)
(74) Representative: Twardowska, Aleksandra
(86) International application number: PCT/PL2011/050055
(87) International publication number: WO 2012/091587

(56) References cited:
- EP-A1- 1 640 408
- US-A1- 2003 039 857
- GEORGE N. GLAVEE ET AL: "Chemistry of Borohydride Reduction of Iron(II) and Iron(III) Ions in Aqueous and Nonaqueous Media. Formation of Nanoscale Fe, FeB, and Fe2B Powders", INORGANIC CHEMISTRY, vol. 34, no. 1, 1 January 1995 (1995-01-01), pages 28-35, XP55025116, ISSN: 0020-1669, DOI: 10.1021/ic00105a009 cited in the application
- JEN-TAUT YEH ET AL: "Investigation of the oxygen depletion properties of low density polyethylene resins filled with thermally stable oxygen scavengers", PROCEEDINGS OF SPIE, vol. 7493, 1 January 2009 (2009-01-01), pages 749368-749368-15, XP55025125, ISSN: 0277-786X, DOI: 10.1117/12.840791

## Description

The subject of the invention is a nanoiron-based oxygen scavenger.

The oxygen presence in the packaging is a factor limiting the product keeping quality.

Oxidation of food products may cause changes of taste, colour and flavour, as well as lower the food nutrition values, facilitating growth of aerobic bacteria, mould and insects, and in other cases the oxygen presence in the packaging may cause corrosion, spoilage of medicaments, degradation of materials, etc. Removing the oxygen from the packaging interior and from the solvent of liquid food and drinks is a way of extending their life span and protection from the negative effects of contact with the oxygen.

There are known methods of packing the food in the modified atmosphere or vacuum packing. However, those technologies do not remove completely the oxygen from the packaging and penetrating into the product packaging. In order to remove the oxygen residues from the gas filling the packaging and penetrating through the packaging material, as well as the oxygen produced inside the packaging during the processes taking place in the packed product the oxygen absorbents are used, i.e. the substances fixing the oxygen or reacting with it, creating the permanent compounds, neutral for the packed product (1).

A variety of the oxygen absorbents forms are known, which use the organic compounds for fixing the oxygen, especially the easily oxidized copolymers, however it is usually required to activate them with use of UV radiation. There are also known absorbents containing alcohols as the oxygen fixing substance, including polyhydroxyl alcohols, like ethylene glycol, propylene glycol, glycerine, sorbitol, which have relatively low absorption capacity and small absorption speed; on the other hand, the oxygen absorbents containing the unsaturated fatty acids and unsaturated hydrocarbons usually are oxidized to the compounds of unpleasant odour, therefore they require using the additional compounds removing the odour.

Also the inorganic compounds are use as the oxygen absorbents. Iron and its compounds are used in many oxygen absorbents. In such absorbents the iron compounds are used, like powdered ferrous oxide, ferrous carbonate and other ferrous compounds, which for inducing the reaction are connected with various catalysts, and also fine powdered iron (2).

However, all known oxygen absorbents using iron and its compounds may be used when at last small amounts of water are present in the packaging, as the iron oxidation reactions take place in its presence according to the following reaction:

Fe + 1/2H₂O + 3/4O₂ → FeOOH

The oxygen absorbents, based upon the bivalent iron compounds, fix the oxygen due to processes taking place according to the following reactions:

Fe →Fe²⁺ + 2e⁻

1/2O₂ + H₂O + 2e⁻ →2OH⁻

Fe²⁺ + 2OH⁻ → Fe(OH)₂

Fe(OH)₂ + 1/2H₂O → Fe(OH)₃

The Mitsubishi Gas Chemical Co company has introduced in the seventies of the 20^{th} century the Ageless® absorbents, based upon the iron. Currently such absorbents, produced by many companies, like Multisorb Technologies Inc, are available under other names, e.g. FreshPaxTM, FreshMaxTM and others. In all known absorbents the iron or its compounds, e.g. ferrous oxides, react with the oxygen in presence of at least small amounts of water (3).

The requirement of water presence results in a fact that the ferrous absorbents must not be used in the packagings where there is no water. The anhydrous environment in the packaging is especially important in case when even small amount of water causes the product degradation. The examples of such products are medicaments, dried food, electronic elements and soldering powder or dry effervescent products.

The activity of known ferrous absorbents is negatively influenced by presence of CO₂ in the surrounding atmosphere, as it reacts with iron, decreasing its amount required for absorbing the oxygen, and produced carbonate passivates the iron surface.

The absorbents based upon iron compounds and derivatives are currently the most efficient and effective oxygen absorbents, being the integral part of a packaging, however their range of application is limited to the packagings with water or where its presence is acceptable.

The oxygen fixing substance is placed inside the pouch made from material easily penetrated by the oxygen. The pouch is placed inside the packaging, and the active compound in the pouch absorbs the oxygen (4).

There are known methods of synthesizing the nanoparticles of metals. One of commonly used methods of synthesizing the nanoparticles is the chemical reduction of metals salts in the solution. The iron nanoparticles are synthesized by reducing the iron salts with the reducing agent, e.g. sodium tetrahydridoborate (5).

In the patent application US 2007/0044591 the 6 to 10 times excess of the reducing agent was used in relation to the stoichiometric amount of iron salt during dropping the iron salt into the solution, and 4 to 10 times excess of this agent during dropping the iron salt into it.

The literature shows that the conditions of synthesizing the nanoparticles have significant influence on the properties of synthesized product (6). Using the same substrates in the nanoiron precipitation, depending on the conditions and the procedure of the process, may lead to products having completely different properties or even composition.

One of known methods of removing the oxygen from the packaging is use of polymer composites, containing easily oxidized components, where the basic active substance is 1,2-polybutadiene, having good properties of fixing the oxygen. Those composites contain the system catalyzing the polymer oxidation process, like cobalt, nickel and iron compounds. The multilayer material contains no more than 5% of the oxygen absorbing substance, and may have form of semi-rigid sheets or thermally formed trays, containers and bottles. Its structure consists of three basic layers: external layer, of low oxygen permeability (1 - 10 ml of O₂/m²/24 h), middle layer, absorbing the oxygen, and internal layer, highly permeable for gases [1].

There are known many technologies of producing the composites, consisting of polymer or polycondensate and solid particles. Introduction of solid particles into the polymer or polycondensate may take place either during the polymerization or polycondensation stage, or during introduction of solid particles into ready polymer.

The type of used technology depends on type and properties of polymer and polycondensate, as well as type and properties of solid particles, but also the composite application.

For example:
- the colloidal metal solution is added to the monomer, so the polymer containing metal is produced in self-organization,
- melting the powdered mixture of polymer and solid particles,
- drying the solution of mixture of resin and solid particles,
- forming the mixture of polymer and solid particles, e.g. by extrusion,
- vapour deposition or using other techniques for applying the metal particles on the polymer surface, then laminating that layer with another layer of the same or other polymer.

There are known few composites of polymers or polycondensates containing iron or its compounds, used as the oxygen absorbing agents. All those composites reveal their activity only in environment containing water. Moreover, in most of them it is required to use the activators, activating iron in the oxygen fixing processes.

The patent application WO 2011112304 discloses the packaging material in form of foam containing nanoiron in particles of size 1 - 25 µm as the oxygen absorbing agent, and the iron compounds are activated with the hygroscopic compounds, namely sodium chloride and sodium bisulphate.

The patent application WO 2007059902 discloses the polymer packaging material, containing the oxygen fixing agent, among other things in form of activated iron. As the activators, among other things, Au, Ag and/or Cu and the alkaline compound are used.

The patent US 5274024 discloses resin containing iron activated with copper and sulphur as the oxygen fixing agent.

The patent US 6908652 discloses the packaging material from the milk acid polymer, containing, among other things, the iron salts as the absorbing agent.

The patent US 6899822 discloses the packaging material from polyethylene containing iron and sodium bisulphate, potassium bisulphate and sodium chloride as activators.

The patent US 7781018 discloses method of synthesizing active nanoiron, activated with FeCl₂ or FeCl₃.

The patent US 2007020456 discloses method of activating iron with halides or compounds hydrolyzing to halides, sulphates and bisulphates.

The patent application US 2011217430 discloses the packaging foam, containing, among other things, activated nanoiron.

The patent application US 2006177653 discloses the multilayer packaging material from high density polyethylene, polypropylene of polypropylene copolymer, where on layer contains the oxygen fixing agent, among other things iron salts.

In the publication of Jen-Taut Yeh et al. "Investigation of the oxygen depletion properties of low density polyethylene resins filled with thermally stable oxygen scavengers", Proceedings of Spie, vol 7493, 1 January 2009, p. 749368-749368-15 and in the EP1640408 the method of scavenging oxygen inside packaging wherein for oxygen scavenging zero-valent iron is used.

The purpose of the invention was to obtain an effective iron-based oxygen scavenger, working irrespective of the presence of moisture in the packaging or water activity of the product.

Unexpectedly, it turned out that by conducting the process of metallic iron precipitation with the method described in the invention, it can be obtained in a form which is characterised by the ability to fix oxygen in any environment, including an anhydrous environment. In particular, it turned out that zero-valent nanoiron obtained with this method contains an admixture of a certain amount of boron and shows exceptionally high oxygen-fixing activity in any environment, even an anhydrous one.

The subject matter of invention is a polymer nanocomposite which is characterised in that it contains a polymer and 1 to 50% parts by weight relative to the polymer of nanoiron wherein the nanoiron is boron doped zero-valent iron and boron content is between 0.01 and 10% by weight.

Preferebaly, the polymer nanocomposite contains a polymer selected from the group: silicone rubbers, polysiloxanes, modified cellulose acetate butyrate, polyamide, polyvinyl alcohol, poly(ethylene terephthalate), cellulose derivatives, modified starch and biodegradable polymers or mixtures of these polymers, preferably silicone rubbers or it contains a biodegradable polymer firom the group: polylactic acid, polyhydroxybutyrate, polyoxymethylene or mixtures of these polymers.

Preferably, the polymer nanocomposite contains boron doped zero-valent iron dispersed in polymer matrix in the amount between 1 and 20% weight ratio relative to the polymer.

Preferably, the polymer nanocomposite is for use as the oxygen scavenger inside packaging.

The next subject of invention is a method of scavenging oxygen inside packaging based on the polymer nanocomposite wherein 1 to 50% parts by weight relative to the polymer of boron doped zero-valent iron in the amount between 0.01 and 10% by weight for oxygen scavenging is used.

Zero--valent iron doped with boron is obtained in a reaction of iron salt reduction with sodium borohydride in a reaction with the following conditions:
- the molar ratio of the iron salt to NaBH₄ is 1:3 with the stoichiometric excess of sodium borohydride relative to the iron salt in the amount between 30 and 50% is used,
- the reagent concentrations are:
   - iron salt between 0.01 and 0.05 M,
   - NaBH₄ between 0,05 and 0.2 M,
- the NaBH₄ solution is dropped into the iron salt solution at a rate corresponding to 3.5 to 5.5 parts by weight /min./100 g.a. Fe,
- the reaction is conducted in a deoxidised neutral gas atmosphere,
- the reaction is conducted at a room temperature, then, after dropping in the whole sodium borohydride, heated to between 70°C and 90°C, and cooled,
and introducing boron doped zero-valent iron in an amount that corresponds to 5 to 50% of the excess relative to the stoichiometric free oxygen content in the packaging and the amount which can permeate through the packaging material during storage.

Preferably, boron doped zero-valent iron is obtained in a reduction reaction with the reagent concentrations:
- iron salt 0.02 M
- NaBH₄ 0.2 M.

Preferably, zero-valent nanoiron doped with boron is obtained in a reduction reaction in which a NaBH₄ solution is dropped into the iron salt solution at a rate corresponding to 4.5 parts by weight /min./100 g.a. Fe.

Preferably, the polymer nanocomposite contains a polymer selected from the group: silicone rubbers, polysiloxanes, modified cellulose acetate butyrate, polyamide, polyvinyl alcohol, poly(ethylene terephthalate), cellulose derivatives, modified starch and biodegradable polymers or mixtures of these polymers, silicone rubbers or that the polymer nanocomposite contains a biodegradable polymer from the group: polylactic acid, polyhydroxybutyrate, polyoxymethylene or mixtures of these polymers.

Preferably, the polymer nanocomposite contains boron doped zero-valent iron dispersed in polymer matrixe in the amount between 1 and 20% weight ratio relative to the polymer.

Preferably, FeCl₃ is used as starting material.

The next subject of invention is a scavenger containing the polymer nanocomposite described above.

Preferably, the polymer nanocomposite in the oxygen scavenger, contains a polymer selected from the group: silicone rubbers, polysiloxanes, modified cellulose acetate butyrate, polyamide, polyvinyl alcohol, poly(ethylene terephthalate), cellulose derivatives, modified starch and biodegradable polymers or mixtures of these polymers, preferably silicone rubbers or the polymer nanocomposite contains a biodegradable polymer from the group: polylactic acid, polyhydroxybutyrate, polyoxymethylene or mixtures of these polymers.

Preferably, the polymer nanocomposite in the oxygen scavenger contains boron doped zero-valent iron dispersed in polymer matrixe in the amount between 1 and 20% weight ratio relative to the polymer.

The next subject of invention is a use of the oxygen scavenger according to any of the claims from 11 to 13 for scavenging oxygen inside packaging wherein it is applied in the amount corresponding to 5 to 10% of the excess relative to the stoichiometric free oxygen content in the packaging and the amount which can permeate through the packaging material during storage.

The first form of iron, not according to the invention, which actively fixes oxygen, e.g., in an anhydrous environment, is nanoiron obtained with a method based on the reduction reaction of a soluble iron (III) or (II) salt, preferably iron (III) chloride, with sodium borohydride, e.g., in the reaction

FeCl₃c + 3NaBH₄+9H₂O → Fe°↓+ 3H₃BO₃+3NaCl + 10,5H₂↑

conducted in a neutral gas atmosphere, retaining the following conditions:
- the molar ratio of the iron salt to NaBH₄ is 1:3 plus/minus 5%,
- the concentration of the reagents are:
   - the iron (III) or (II) salt between 0.01 and 0.05 M, preferably 0.05 M
   - NaBH₄ between 0.04 and 0.2 M, preferably 0.2 M
- a NaBH₄ solution is dropped into the iron salt solution with a rate corresponding to 0.6 to 1.1 parts by weight per 100 g.a. (gram-atoms) Fe per minute, most preferably 0.8 parts by weight per 100 g.a. Fe per minute,
the reaction is conducted at a room temperature, then, after instilling in of the whole amount of the sodium borohydride, heated to between 70°C and 90°C, and cooled.

The nanoiron preparation reactions and all operations of isolation of the product, its purification and storage are conducted in a deoxidised neutral gas atmosphere.

In the first variation of the invention, the iron salt reduction reaction, preferably iron(III) chloride, with sodium borohydride, is conducted in a heated reactor under a reflux condenser, in which sodium borohydride is introduced by portions into the iron salt solution, with maintaining the sodium borohydride introduction rate in the range between 0.6 and 1.1 parts by weight per 100 g.a. Fe per minute. The most preferable is sodium borohydride introduction with the rate of 0.8 parts by weight per 100 g. a. Fe per minute.

The concentrations of the solutions and the rate of instilling in of sodium borohydride influence the total efficiency of the reaction and the form of the nanoiron residue.

The second form of iron, according to the invention, actively fixing oxygen, e.g., in an anhydrous environment, is zero-valent nanoiron with a small admixture of boron, prepared with the reaction of reducing the soluble iron (III) or (II) salt, preferably iron (III) chloride, with sodium borohydride, e.g., as in the reaction

FeCl₃+ 3NaBH₄+(9-x)H₂O → Fe/FeBₓ°↓+ (3-x)H₃BO₃+3NaCl +( 10-xH₂↑

conducted in a neutral gas atmosphere, retaining the following conditions:
- the molar ratio of the iron salt to NaBH₄ is 1:3, with excess sodium borohydride relative to the stoichiometric amount of the iron salt between 30 and 50%, preferably 30%,
- the concentration of the reagents are:
   - the iron salt between 0.1 and 0.5 M, preferably 0.2 M
   - NaBH₄ between 0.05 and 0.2 M, preferably 0.2 M
- the NaBH₄ solution is dropped into the iron salt solution with a rate corresponding to 30 between 3.5 and 5.5 parts by weight per 100 g.a. Fe, most preferably 4.5 parts by weight per 100 g.a. (gram-atoms) Fe,
the reaction is conducted at a room temperature, then, after instilling in of the whole amount of the sodium borohydride, heated to between 70°C and 90°C, and cooled.

The reactions of preparation of zero-valent nanoiron doped with boron and all operations of isolation of the product, its purification and storage are conducted in a deoxidised neutral gas atmosphere.

Zero-valent nanoiron doped with boron obtained with the method described in the invention contains a boron admixture in the amount between 0.1 and 10%.

The iron salt reduction reaction, preferably iron(III) chloride, with sodium borohydride, with the method described in the invention, is conducted in a heated reactor under a reflux condenser, in which sodium borohydride is introduced by portions into the iron salt solution, with maintaining the sodium borohydride introduction rate in the range between 3.5 and 5.5 parts by weight/min/100 g.a. Fe. The most preferable is the sodium borohydride introduction with the rate of 4.5 parts by weight/min/100 g.a. Fe.

The concentrations of the solutions and the rate of instilling in of sodium borohydride influence the total efficiency of the reaction and the form of the residue.

In the second aspect, the subject of the invention is the manner of oxygen scavenging, in particular in an anhydrous environment, with the application of nanoiron or zero-valent nanoiron doped with boron, prepared with the method described in the invention.

Oxygen fixation by nanoiron, according to the invention, proceeds according to the reaction:

5Fe +7/2O₂ → Fe₂O₃+ Fe₃O₄

In a variation of the method based on the invention, in which zero-valent nanoiron doped with boron is used, the oxygen fixing reaction is carried out in the following manner:

3 Fe/FeBₓ + (2+3x) O₂→Fe₃O₄ + XB₂O₃

In the method based on the invention, nanoiron is used in amounts corresponding to between 5 and 10%, and in the case of application of zero-valent iron doped with boron, prepared with the method described in the invention, in the amount corresponding to 5% excess relative to the stoichiometric amount of oxygen to be scavenged, both that present in the packaging, as well as the projected oxygen permeation through the packaging material in the planned storage period of the packaged product.

In the third aspect, the subject of the invention is a nanocomposite containing a polymer selected from the group: silicone rubbers, polysiloxanes, modified cellulose acetate butyrate (CAB), polyamide PA, polyvinyl alcohol (PVA), polyethylene PE, poly (ethylene terephthalate) (PET), cellulose derivatives, modified starch and biodegradable polymers, including, e.g., polylactic acid PLA, polyhydroxybutyrate (PHB), polyoxymethylene (POM) or mixtures of these polymers, and zero-valent nanoiron doped with boron, prepared with the method described in the invention.

In the first not according to the invention, the nanocomposite containing nanoiron prepared with the method described in the invention, depending on the intended use and type of the polymer, is produced with known methods, in particular:
- in the case of silicone rubber, iron is added directly to the rubber and cured after mixing,
- in the case of polyamide, nanoiron is introduced into one of the reagents and a polyamide synthesis reaction is conducted, as a result of which a nylon nanocomposite is obtained with nanoiron powder,
- in the case of polyvinyl alcohol (PVA), nanoiron is introduced into PVA expanded, e.g., in acetone, and after mixing, in order to cure, it is exposed to UV radiation.
- in the case of polyethylene, owing to difficulties with dissolving, nanoiron is introduced by mechanical mixing of nanoiron powder with the polymer and then injection moulded.

In the second variation, depending on the intended use and type of the polymer, the nanocomposite containing zero-valent iron doped with boron (FeBx) in the amount of between 0.01 and 10%, obtained with the method described in the invention, is produced with known methods, in particular:
- in the case of silicone rubber, (FeBx) iron is added directly to the rubber and cured after mixing,
- in the case of polyamide, (FeBx) iron is introduced into one of the reagents and a polyamide synthesis reaction is conducted, as a result of which a nylon nanocomposite is obtained with (FeBx) iron powder,

- in the case of cellulose derivatives, CAB is modified in order to improve its barrier effect and FeBx is additionally introduced,
- in the case of polyethylene, owing to difficulties with dissolving, (FeBx) iron is introduced by mechanical mixing of iron powder with the polymer and then injection moulded.

In the case of nanocomposites containing polyvinyl alcohol (PVA) and zero-valent iron doped with boron (FeBx), the method of its production is new and is based on PVA expansion in a low-molecular organic solvent miscible with water, in particular in acetone, then zero-valent iron doped with boron (FeBx) is introduced, after which spontaneous cross-linking of the nanocomposite occurs. In this method, cross-linking triggered by UV radiation has been eliminated.

Nanocomposites produced with the method based on the invention, i.e. containing both zero-valent iron doped with boron (FeBx), depending on the polymer type and the functional properties required, contain nanoiron or zero-valent iron doped with boron (FeBx) in amounts between 1 and 50% parts by weight, preferably between 1 and 20%.

In the fourth aspect, the subject of the invention are scavengers containing zero-valent iron doped with boron (FeBx), obtained with the method described in the invention, in the amount adjusted to the potential amount of oxygen which can be present inside the packaging in which the scavenger is to be used, and the projected duration of storage and the barrier capacity of the packaging material. Preferably, the container is in the form of a sachet made from paper or plastic permeable to oxygen.

Scavengers based on the invention can be used in the form of sachets filled with the scavenger or in another form preventing the contact of pulverised iron with the packaged product.

Sachets with zero-valent iron doped with boron (FeBx), as provided in the invention, before pouring into the packaging in which they are to scavenge oxygen, should be stored in packaging made of metallised PE film filled with a neutral gas.

The research conducted suggests that the additional barrier in the form of the paper layer of the sachet does not significantly impact the effectiveness of oxygen scavenging of a scavenger containing nanoiron or zero-valent iron doped with boron (FeBx) based on the invention.

In this variation of the invention, the scavenger is a nanocomposite in a form which makes it possible to place it in a packaging or constituting an outer element of packaging, and in particular in the form of wrapping film, trays, containers, cups, bottles, screw caps, screw lids, seals, labels, inserts. A special form can be laminates containing as an active oxygen-scavenging layer a nanocomposite based on the invention.

Due to the high activity, scavengers based on the invention should be produced and stored in an oxygen-free atmosphere until the moment of application in packaging in which they are to function as oxygen scavengers.

A scavenger based on the invention should contain zero-valent iron, in an amount corresponding to 5% excess relative to the stoichiometric amount of oxygen to be scavenged, both oxygen present in the packaging at the moment of sealing it and/or emitted by the product during storage, as well as the projected oxygen permeation through the packaging material during the planned storage period.

Due to the high activity, all forms of the scavenger, in particular containers, sachets, trays, wrapping film, miscellaneous receptacles, cups, bottles, screw caps, screw lids, seals, labels, inserts (a special form can be laminates containing as an active oxygen-scavenging layer a nanocomposite based on the invention) containing zero-valent iron doped with boron (FeBx) based on the invention should be produced and stored in an oxygen-free atmosphere until the moment of placement in packaging in which they are to function as oxygen scavengers.

Research on oxygen scavenging in an oxygen dioxide-enriched atmosphere has shown that the presence of CO₂ does not significantly reduce the activity of nanoiron or zero-valent iron doped with boron (FeBx) based on the invention.

A potential application of the oxygen scavengers based on the invention can be, in particular, water-sensitive products.

The invention is illustrated by, but not limited to, the following examples.

In all examples referring to the measurement of ability to absorb the oxygen the model packagings have been used, made from plastic (PA/PE laminate, oxygen permeability (60 cm³/m² • 24h, Folimat, Toruń) of capacity of 250 ml, tightly closed by welding the packaging layers, having self-sealing septum (Stylus®), located on the packaging wall for filling with air and sampling. The oxygen concentration in the test packagings with absorbent has been measured with use of analyser (Oxygen Analyzer, Teledyne 9070, Teledyne Analytical Instruments).

### Example 1 (not according to the invention). Synthesizing nanoiron in reaction of iron (III) chloride

In the bulb of volume of 3 dm³ 1 dm³ of 0.05 M solution of hydrated iron (III) chloride has been placed, the set has been rinsed with argon and instilling in of 1 dm³ of 0.15 M water solution of sodium tetrahydridoborate has been initiated with speed of 11 cm³/min. During instilling in the black, flocculent deposit, flowing on the surface of orange solution may be observed, as well as intensively released hydrogen. With increasing amount of dropped in NaBH4 the solution changes its colour from orange to black, and the amount of precipitated iron deposit increases. After complete instilling in of sodium tetrahydridoborate solution the whole thing is heated until the solution reaches temperature of 75°C.

With the temperature rise the progressive solution colour change has been observed, from black, through greyish, to complete colour vanish and synthesizing the transparent solution. In the final stage of heating the flocculent reaction product has dropped onto the bottom in form of black deposit. After cooling the deposit has been filtered on Schlenk set, for the whole time in argon atmosphere, and the deposit has been washed with deoxidized acetone. Synthesized nanoiron has been stored in Schlenk vessel in protective atmosphere.

3.5 g of product have been synthesized, with efficiency of 75% of theoretical value.

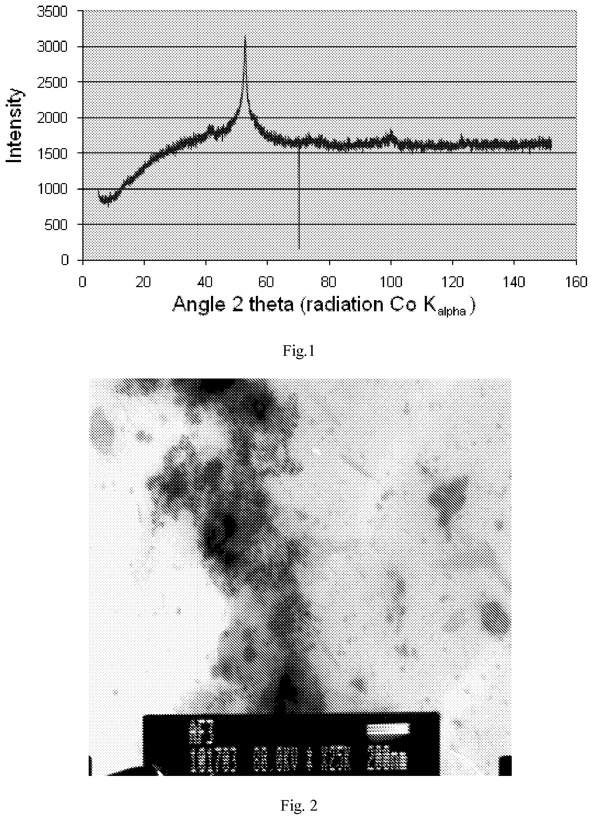

Fig. 1 presents the X-ray photograph of synthesized iron powder (radiation Co Kₐₗₚₕₐ) in range of angle 2 theta = 150 degrees. Peaks visible at angle 2 theta 52.5; 77.3; 99.7; 124 come from alpha Fe phase, which confirms that synthesized nanoiron is in form of alpha Fe.

Fig. 2 presents the photograph made with use of TEM technique of nanoiron synthesized according to example 1. The nanoiron according to the invention creates agglomerates of cluster-like structure, where the agglomerate has dimensions of approx. 200 nm (and more) and consists of smaller grains of dimensions in range 10 - 50 nm.

### Example 2 (not according to the invention). Assessment of nanoiron ability to absorb the oxygen

The nanoiron samples, synthesized according to example 1, of weight approx 1 g have been placed in the model packagings, which have been filled with air up to their full capacity. The gas samples for determining the oxygen content have been collected every day, from the first day to 30 days. The initial oxygen concentration in the packagings was 20.95%. Each measurement included air samples from three packagings, from which the air content was determined and the average value was calculated. The model packagings after air sampling have been excluded from further tests. Table 1 presents the oxygen level in the packagings after a given time. The product has removed the oxygen completely from the packaging after 5-6 days, and the highest absorption took place in the first day. The product has also fixed the oxygen penetrating into the packaging during the whole test period. Theoretically, the nanoiron amount, placed in the single test packaging is able to absorb 300 cm³ of oxygen.

**Table 1**

| Amount of nanoiron weight [g] | test day | oxygen concentration after absorption [%] | amount of absorbed oxygen [%] |
|---|---|---|---|
| 1.8 | 0 | 20.95 | 0 |
| | 1 | 9.45 | 54.89 |
| | 2 | 6.08 | 70.98 |
| | 3 | 4.51 | 78.47 |
| | 4 | 0.71 | 96.61 |
| | 5 | 0.051 | 99.76 |
| | 6 | 0.0011 | 99.99 |
| | 30 | 0.000001 | 100.00 |

### Example 3 (not according to the invention). Influence of moisture on the sorption activity of absorbents

The procedure was the same as in example 2, but the packaging, besides the nanoiron sample, synthesized according to example 1, contained also the tampon soaked with 2 ml of water.

The tests results are shown in table 2. The presence of moisture does not change the nanoiron activity in a significant way.

**Table 2**

| Amount of nanoiron weight [g] | test day | oxygen concentration after absorption [%>] | amount of absorbed oxygen [%>] |
|---|---|---|---|
| 1.05 | 0 | 20.95 | 0 |
| | 1 | 7.51 | 64.15 |
| | 2 | 3.2 | 84.73 |
| | 3 | 1.49 | 92.89 |
| | 4 | 0.000001 | 100.00 |
| | 5 | 0.000001 | 100.00 |
| | 6 | 0.000001 | 100.00 |
| | 30 | 0.000001 | 100.00 |

### Example 4 (not according to the invention). Influence of CO2 presence on the sorption activity of absorbents

The procedure was the same as in example 2, but the packaging was filled with the mixture of gases (20.95% of oxygen + 20% of carbon dioxide + 49.05% of nitrogen) instead of air. The tests results are shown in table 3. The presence of CO₂ practically does not influence the absorption speed.

**Table 3**

| Amount of nanoiron weight [g] | test day | oxygen concentration after absorption [%] | amount of absorbed oxygen [%] |
|---|---|---|---|
| 1.23 | 0 | 20.95 | 0 |
| | 1 | 11.25 | 46.30 |
| | 2 | 8.45 | 59.67 |
| | 3 | 4.51 | 78.47 |
| | 4 | 1.09 | 94.94 |
| | 5 | 0.02 | 99.90 |
| | 6 | 0.00021 | 100.00 |
| | 30 | 0.000001 | 100.00 |

### Example 5 (not according to the invention). Simultaneous influence of moisture and CO₂ presence on the sorption activity of absorbents

The procedure was the same as in example 4, but the packaging contained also the tampon soaked with 2 ml of water, as in example 3. The tests results are shown in table 4. The simultaneous presence of CO₂ and moisture has no negative influence of the oxygen absorption process.

**Table 4**

| Amount of nanoiron weight [g] | test day | oxygen concentration after absorption [%] | amount of absorbed oxygen [%] |
|---|---|---|---|
| 1.38 | 0 | 20.95 | 0 |
| | 1 | 6.62 | 68.4 |
| | 2 | 3.46 | 83.48 |
| | 3 | 1.97 | 90.6 |
| | 4 | 0.000001 | 100 |
| | 5 | 0.000001 | 100 |
| | 6 | 0.000001 | 100 |
| | 30 | 0.000001 | 100 |

### Example 6. Synthesizing of zerovalent nanoiron with boron (FeBₓ) admixture in reaction of iron (III) chloride

In the bulb of volume of 3 dm³ 250 ml of 0.2 M solution of hydrated iron (III) chloride has been placed, the set has been rinsed with argon and instilling in of 1000 m of 0.2 M water solution of sodium tetrahydridoborate has been initiated with speed of 16.5 ml/min.

During instilling in the deposit is precipitated in an intense way, and the solution changes its colour from orange to black. After complete instilling in of sodium tetrahydridob orate solution the whole thing is heated until the solution reaches temperature of 75°C and maintained in this temperature for 1 hour.

Then the solution is cooled down in the neutral gas flow and left for approx. 3 hours.

The deposit has been filtered on Schlenk set in the neutral gas atmosphere and washed with deoxidized acetone. Synthesized nanoiron with boron admixture has been stored in Schlenk vessel in protective, oxygen-free atmosphere.

The composition analysis with use of emission spectrometer ICP-OES YISTA-MPX (Yarian company) has revealed content of approx. 3.5% of boron in the sample.

The identity of zerovalent Fe (FeBₓ) has been confirmed with use of magnetic method. The synthesized product is diamagnetic.

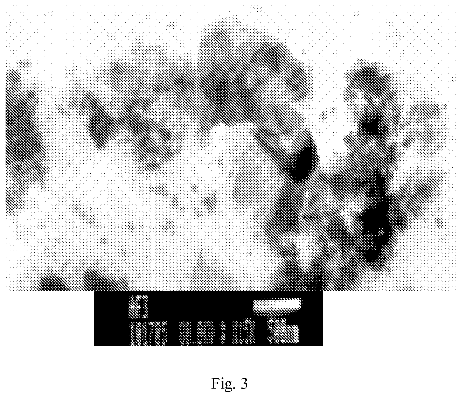

**Fig. 3** presents the photograph made with use of TEM technique of nanoiron synthesized according to example 6. The nanoiron FeBₓ according to the invention creates agglomerates of cluster-like structure, where the agglomerate has dimensions of approx. 200 nm (and more) and consists of smaller grains of dimensions in range 10 - 50 nm.

### Example 7. Assessment of FeBₓ ability to absorb the oxygen

The nanoiron FeBₓ samples, synthesized according to example 6, of weight approx 1 g have been placed in the model packagings, which have been filled with dried air up to their full capacity. The gas samples for determining the oxygen content have been collected after 10 and 30 minutes, 1 hour, and then everyday for 6 days, and after 30 days. The initial oxygen concentration in the packagings was 20.95% and has been confirmed by measurement during air dosage to the packaging. Each measurement included air samples from three packagings, from which the air content was determined and the average value was calculated. The model packagings after air sampling have been excluded from further tests. Table 5 presents the oxygen level in the packagings after a given time. The product has removed the oxygen completely from the packaging after over 1 hour, and the highest absorption took place in the first 30 minutes. The product has also fixed the oxygen penetrating into the packaging during the whole test period. Theoretically, the nanoiron amount, placed in the single test packaging is able to absorb 300 cm³ of oxygen.

**Table 5**

| test time | oxygen concentration after absorption [%] | amount of absorbed oxygen [%] |
|---|---|---|
| 0 | 20.95 | 0 |
| 10 mins | 16.10 | 83.9 |
| 30 mins | 6.80 | 93.2 |
| 1 hour | 2.64 | 97.36 |
| 1 d | 0.000001 | 100.00 |
| 2d | 0.000001 | 100.00 |
| 3 d | 0.000001 | 100.00 |
| 4 d | 0.000001 | 100.00 |
| 5 d | 0.000001 | 100.00 |
| 6 d | 0.000001 | 100.00 |
| 30 d | 0.000001 | 100.00 |

### Example 8. Influence of moisture on the sorption activity of FeBₓ products

The procedure was the same as in example 7, but the packaging, besides nanoiron FeBₓ, contained also the tampon soaked with 2 ml of water. The tests results are shown in table 6. The presence of moisture does not change the nanoiron activity in a significant way

**Table 6**

| test time | oxygen concentration after absorption [%] | amount of absorbed oxygen [%] |
|---|---|---|
| 0 | 20.95 | 0 |
| 10 mins | 12.85 | 87.15 |
| 30 mins | 6.56 | 93.44 |
| 1 hour | 1.63 | 98.37 |
| 2 hours | 0.000001 | 99.9999 |
| 1 d | 0.000001 | 100.00 |
| 2d | 0.000001 | 100.00 |
| 3 d | 0.000001 | 100.00 |
| 4 d | 0.000001 | 100.00 |
| 5 d | 0.000001 | 100.00 |
| 6 d | 0.000001 | 100.00 |
| 30 d | 0.000001 | 100.00 |

### Example 9. Influence of CO2 presence on the sorption activity of FeBx products

The procedure was the same as in example 7, but the packaging was filled with the mixture of gases (20.95% of oxygen + 20% of carbon dioxide + 49.05%) of nitrogen) instead of air. The tests results are shown in table 7. The presence of CO₂ practically does not influence the absorption speed.

**Table 7**

| test time | oxygen concentration after absorption [%] | amount of absorbed oxygen [%] |
|---|---|---|
| 0 | 20.95 | 0 |
| 10 mins | 9.60 | 90.40 |
| 30 mins | 6.32 | 93.68 |
| 1 hour | 0.66 | 99.34 |
| 2 hour | 0.000001 | 99.9999 |
| 1 d | 0.000001 | 100.00 |
| 2d | 0.000001 | 100.00 |
| 3 d | 0.000001 | 100.00 |
| 4 d | 0.000001 | 100.00 |
| 5 d | 0.000001 | 100.00 |
| 6 d | 0.000001 | 100.00 |
| 30d | 0.000001 | 100.00 |

### Example 10. Influence of CO₂ presence on the sorption activity of FeBₓ products

The procedure was the same as in example 9, but the packaging contained also the tampon soaked with 2 ml of water, as in example 8. The tests results are shown in table 8. The simultaneous presence of CO₂ and moisture has no negative influence.

**Table 8**

| test time | oxygen concentration after absorption [%] | amount of absorbed oxygen [%] |
|---|---|---|
| 0 | 20.95 | 0 |
| 10 mins | 11.25 | 88.75 |
| 30 mins | 6.44 | 93.56 |
| 1 hour | 1.15 | 98.75 |
| 2 hours | 0.000001 | 99.9999 |
| 1 d | 0.000001 | 100.00 |
| 2d | 0.000001 | 100.00 |
| 3 d | 0.000001 | 100.00 |
| 4 d | 0.000001 | 100.00 |
| 5 d | 0.000001 | 100.00 |
| 6 d | 0.000001 | 100.00 |
| 30 d | 0.000001 | 100.00 |

### Example 11 (not according to the invention). Nanoiron in the silicone matrix

3.45 g of nanoiron powder has been added to 4.4 g of silicone rubber Polastosil (Silikony Polskie), then the components have been thoroughly mixed and 0.44 g of the crosslinking catalyst OL-1 (Silikony Polskie) has been added. The whole thing has been intensively mixed another time for the uniform catalyst distribution. The synthesized dense mass of rubber-like consistence has been formed in form of discs of various dimensions and thickness, which have been left for 20 - 30 minutes for complete polymerization. The crosslinking of rubbers has been accelerated by heating up to 50°C. All activities have been performed in the argon atmosphere.

### Example 12. Zerovalent iron FeBₓ in the silicone matrix

5.5 g of zerovalent nanoiron, synthesized according to example 6 has been added to 9.25 g of silicone rubber Polastosil (Silikony Polskie), then the components have been thoroughly mixed and 0.95 g of the crosslinking catalyst OL-1 (Silikony Polskie) has been added. The whole thing has been intensively mixed another time for the uniform catalyst distribution. The synthesized dense mass of rubber-like consistence has been formed in form of discs of various dimensions and thickness, which have been left for 20 - 30 minutes for complete polymerization. The crosslinking of rubbers has been accelerated by heating up to 50°C. All activities have been performed in the argon atmosphere.

### Example 13 (not according to the invention). Nanoiron in nylon 6.6

In the reaction bulb the water solution of 25 g of hexamethylenediamine in 50 ml of H₂O has been prepared, to which 5.0 g of nanoiron synthesized according to example 1 have been added. In the dropper the mixture of 30 ml of adipic acid chloride in 50 ml of 1-n-octanol has been prepared, which has been then dropped into the solution in the bulb, mixing it for the whole time.

After finished reaction the solution from above the created nylon, containing the iron product, has been drained, and it was dried in the protective atmosphere with slight heating, then the synthesized nanocomposite has been divided into samples of weight of approx. 1 g. All activities have been performed in the argon atmosphere.

### Example 14. Zerovalent nanoiron FeBₓ in nylon 6.6

In the reaction bulb the water solution of 25 g of hexamethylenediamine in 50 ml of H₂O has been prepared, to which 5.0 g of nanoiron FeBₓ synthesized according to example 6 have been added.

In the dropper the mixture of 30 ml of adipic acid chloride in 50 ml of toluene has been prepared, which has been then dropped into the solution in the bulb, mixing it for the whole time. All activities have been performed in the argon atmosphere.

After finished reaction the solution from above the created nylon, containing the iron product, has been drained, and it was dried in the protective atmosphere with slight heating, then the synthesized nanocomposite has been divided into samples of weight of approx. 1 g.

### Example 15 (not according to the invention). Nanoiron in PVA 5

The crystalline polyvinyl alcohol has been swelled by flooding 5 g of PVA with acetone. After 1.5 h the distilled water (1:1) has been added and the whole thing was gently heated up to 60°C synthesizing the transparent solution, which has been deoxidized in the argon flow.

5.5 g of nanoiron product, synthesized according to example 1, has been flooded with PVA solution, mixed and for, with use of casting method in form of thin film. Then the whole thing has been illuminated with UV lamp at wave length (lambda) in range of 254 - 360 nm for 20 minutes. All activities have been performed in the argon atmosphere.

### Example 16. Zerovalent nanoiron FeBₓ in PVA

The crystalline polyvinyl alcohol has been swelled by flooding 5 g of PVA with acetone. After 1.5 h the distilled water (1:1) has been added and the whole thing was gently heated up to 60°C synthesizing the transparent solution, which has been deoxidized in the argon flow.

The zerovalent nanoiron, synthesized according to example 6, has been filtered and without drying 5.0 g of the product has been flooded with PVA solution and mixed. In the result of quick crosslinking reaction the PVA gel, filled with zerovalent iron, has been synthesized. All activities have been performed in the argon atmosphere.

### Example 17. Zerovalent nanoiron FeBₓ in cellulose acetate butyrate (CAB)

In the reaction vessel of volume of 250 cm³ 4 g of cellulose acetate butyrate has been placed, then 100 cm³ of acetone have been added and the whole thing was intensively mixed. After synthesizing the homogenous solution 4.3 cm³ of tetraethyl orthosilicate and 0.72 cm³ of phthalate have been added, maintaining intensive mixing. Then 1.4 g of solution dibutyl tin dilaurate as initiator has been added. Mixing has been maintained until synthesizing the homogenous solution, to which 3 g of zerovalent iron FeBₓ, synthesized according to example 6, has been added. Then the solvent has been partially removed on the vacuum evaporator, and the residue has been poured out on the teflon platter, placed in the anaerobic chamber. After complete evaporation of the solvent (approx. 8 hours) the foil of modified CAB has been synthesized, which has been divided into pieces of weight of approx. 1 g. All activities have been performed in the argon atmosphere.

### Example 18 (not according to the invention). Nanoiron in PE

600 g of HD polyethylene has been placed in the bulb, washed with argon and transferred to the oxygen-free chamber, where 6.1 g of nanoiron according to example 1 have been to the bulb. The bulb has been closed and protected with parafilm. Then the bulb with polyethylene and nanoiron has been thoroughly mixed.

From the Fe/PE mixture the cubicoid have been made in the injection moulding machine and extruded in form of foil.

### Example 19 (not according to the invention). Assessment of nanoiron ability to absorb the oxygen in the silicone matrix

The nanoiron sample in the silicone matrix, synthesized according to example 11, weighing approx. 1 g, has been placed in the model packaging, which has been filled with mixture containing 5% of oxygen in nitrogen up to its full capacity. The gas samples have been collected every hour up to 3 hours, then every day from the dosage day up to 30^{th} day. The initial oxygen concentration in the packagings was 5%.

Table 9 presents the oxygen level in the packagings containing nanoiron in the silicone matrix after a given time. The product has removed the oxygen completely from the packaging in the third day. The product has also fixed the oxygen penetrating into the packaging during the whole test period.

**Table 9**

| test day | oxygen concentration after absorption [%] | amount of absorbed oxygen [%] |
|---|---|---|
| 0 | 5.0 | 0 |
| 1 hour | 2.0 | 60 |
| 2 hours | 1.0 | 80 |
| 3 hours | 0.5 | 90 |
| 3 days | 0.000001 | 100 |
| 30 | 0.000001 | 100 |

### Example 20. Assessment of FeBₓ ability to absorb the oxygen in the silicone matrix

The FeBₓ sample in the silicone matrix, synthesized according to example 12, weighing approx. 1 g, has been placed in the model packaging, which has been filled with mixture containing 5% of oxygen in nitrogen up to its full capacity. The gas samples have been collected after 1 and 2 hours, then every day from the dosage day up to 30th day. The initial oxygen concentration in the packagings was 5%.

Table 10 presents the oxygen level in the packagings containing sample of FeBₓ in the silicone matrix after a given time. The product has removed the oxygen completely from the packaging in the seventh day. The product has also fixed the oxygen penetrating into the packaging during the whole test period.

**Table 10**

| test day | oxygen concentration after absorption [%] | amount of absorbed oxygen [%] |
|---|---|---|
| 0 | 5.0 | 0 |
| 1 hour | 2.0 | 60 |
| 2 hours | 1.5 | 70 |
| 1 day | 0.5 | 90 |
| 2 days | 0.25 | 95 |
| 3 days | 0.15 | 97 |
| 7 days | 0.000001 | 100 |
| 30 | 0.000001 | 100 |

### Example 21 (not according to the invention). Assessment of nanoiron ability to absorb the oxygen in nylon 6.6

The nanoiron sample in nylon 6, synthesized according to example 13, weighing approx. 1 g, has been placed in the model packaging, which has been filled with mixture containing 5% of oxygen in nitrogen up to its full capacity. The gas samples for determining the oxygen content have been collected every day, from the dosage day to 30 days. The initial oxygen concentration in the packagings was 5%.

Table 11 presents the oxygen level in the packagings containing nanoiron in nylon 6 after a given time. The product has removed the oxygen completely from the packaging in the sixth day. The product has also fixed the oxygen penetrating into the packaging during the whole test period.

**Table 11**

| test day | oxygen concentration after absorption [%] | amount of absorbed oxygen [%] |
|---|---|---|
| 1 | 5.0 | 0 |
| 2 | 4.5 | 20 |
| 3 | 3.3 | 34 |
| 4 | 1.5 | 66 |
| 5 | 0.5 | 90 |
| 6 | 0.000001 | 100 |
| 30 | 0.000001 | 100 |

### Example 22. Assessment of zerovalent iron FeBₓ ability to absorb the oxygen in nylon 6.6

The zerovalent nanoiron FeBₓ sample in nylon 6, synthesized according to example 14, weighing approx. 1 g, has been placed in the model packaging, which has been filled with mixture containing 5% of oxygen in nitrogen up to its full capacity. The gas samples for determining the oxygen content have been collected every day, from the dosage day to 30 days.

The initial oxygen concentration in the packagings was 5%.

Table 12 presents the oxygen level in the packagings containing zerovalent iron FeBₓ in nylon 6 after a given time. The product has removed the oxygen completely from the packaging in the fifth day. The product has also fixed the oxygen penetrating into the packaging during the whole test period.

**Table 12**

| test day | oxygen concentration after absorption [%] | amount of absorbed oxygen [%] |
|---|---|---|
| 1 | 5.0 | 0 |
| 2 | 4.0 | 20 |
| 3 | 2.6 | 48 |
| 4 | 1.1 | 78 |
| 5 | 0.000001 | 100 |
| 6 | 0.000001 | 100 |
| 30 | 0.000001 | 100 |

### Example 23 (not according to the invention). Assessment of nanoiron ability to absorb the oxygen in PVA

The nanoiron sample in PVA, synthesized according to example 15, weighing approx. 1 g, has been placed in the model packaging, which has been filled with mixture containing 5% of oxygen in nitrogen up to its full capacity. The frequency of collecting the gas samples and the oxygen level in the packagings containing nanoiron in PVA after a given time are shown in table 13.

The product has removed the oxygen completely from the packaging in the sixth day. The product has also fixed the oxygen penetrating into the packaging during the whole test period. The initial oxygen concentration in the packagings was 5%.

**Table 13**

| test time | oxygen concentration after absorption [%] | amount of absorbed oxygen [%] |
|---|---|---|
| 0 | 20.95 | 0 |
| 4 mins | 17.6 | 16.0 |
| 7 mins | 15.1 | 27.92 |
| 12 mins | 14.1 | 32.7 |
| 22 mins | 13.6 | 35.1 |
| 42 mins | 12..5 | 40.3 |
| 1 day | 11.9 | 43.2 |
| 4 days | 0.000001 | 100 |
| 21 days | 0.000001 | 100 |

### Example 24. Assessment of FeBₓ ability to absorb the oxygen in PVA

The FeBₓ in PVA sample in PVA, synthesized according to example 16, weighing approx. 1 g, has been placed in the model packaging, which has been filled with mixture containing 5% of oxygen in nitrogen up to its full capacity. The frequency of collecting the gas samples and the 5 oxygen level in the packagings containing FeBₓ in PVA after a given time are shown in table 14. The product has removed the oxygen completely from the packaging in the fifth day. The product has also fixed the oxygen penetrating into the packaging during the whole test period. The initial oxygen concentration in the packagings was 5%.

**Table 14**

| test time | oxygen concentration after absorption [%] | amount of absorbed oxygen [%] |
|---|---|---|
| 0 | 20.95 | 0 |
| 4 mins | 15.7 | 25.1 |
| 7 mins | 14.5 | 30.8 |
| 12 mins | 14.1 | 32.7 |
| 22 mins | 13.9 | 33.7 |
| 42 mins | 12.2 | 41.8 |
| 1 day | 6.3 | 69.9 |
| 4 days | 0.000001 | 100 |
| 21 days | 0.000001 | 100 |

### Example 25 (not according to the invention). Assessment of nanoiron ability to absorb the oxygen in PE

The nanoiron sample in PE, synthesized according to example 1, weighing approx. 7 g (containing approx. 1% of Fe), has been placed in the model packaging, which has been filled with mixture containing 5% of oxygen in nitrogen up to its full capacity. The gas samples for determining the oxygen content have been collected every day, from the dosage day to 30 days. The initial oxygen concentration in the packagings was 5%.

Table 15 presents the oxygen level in the packagings containing nanoiron in PE after a given time. The product has only partially removed the oxygen from the packaging after the fourth day. It is connected with low PE permeability for the oxygen.

**Table 15**

| test day | oxygen concentration after absorption [%] | amount of absorbed oxygen [%] |
|---|---|---|
| 0 | 5.0 | 0 |
| 1 | 4.76 | 0.24 |
| 2 | 4.64 | 0.36 |
| 3 | 4.52 | 0.48 |
| 4 | 4.40 | 0.60 |
| 5 | 4.40 | 0.60 |

### References:

1. Brody A L., E. R. Strupinsky, L. R. Kline "Active Packaging for Food Applications", Technomic Publishing Company Inc., 2001
2. Active Packaging - Absorbing System w Food Packaging Science and Technology, authors: Dong Sun Lee, Kit L. Yam, Luciano Piergiovanni, CRC Press, 2008; ISBN: 978-0-8247- 2779-6
3. Miltz J., Perry M., Packaging Technology and Science 18/1, 2005, s. 21-27
4. Braga, L. R., Sarantopoulos, C. I., Peres, L. and Braga, J. W., Evaluation of absorption kinetics of oxygen scavenger sachets using response surface methodology. Packaging Technology and Science, 23(2010): 351-361
5. Choe S, Chang Y.Y., Hwangnd K.Y., Khim J., Nineties of reductive denitrification by nanoscale zero-valent iron", Chemosphere, 41(8), 2000, str. 1307-1311
6. Glavee G. N., Klabunde K. J., Sorensen C. M., Hadjipanayis G. C., Chemistry of Borohydride Reduction of Iron(II) and Iron(III) Ions in Aqueous and Nonaqueous Media. Formation of Nanoscale Fe, FeB, and Fe2B Powders, Inorg. Chem., 34 (1), 1995, 28-35

## Claims

1. The polymer nanocomposite is **characterised in that** it contains a polymer and 1 to 50% parts by weight of nanoiron relative to the polymer, wherein the nanoiron is boron doped zero-valent iron and boron content is between 0.01 and 10% by weight.

2. The polymer nanocomposite according to any of the claims from 1 containing a polymer selected from the group: silicone rubbers, polysiloxanes, modified cellulose acetate butyrate, polyamide, polyvinyl alcohol, poly(ethylene terephthalate), cellulose derivatives, modified starch and biodegradable polymers or mixtures of these polymers, preferably silicone rubbers or it contains a biodegradable polymer firom the group: polylactic acid, polyhydroxybutyrate, polyoxymethylene or mixtures of these polymers.

3. The polymer nanocomposite according to any of the claims 1 to 2 containing boron doped zero-valent iron dispersed in polymer matrix in the amount between 1 and 20% weight ratio relative to the polymer.

4. Use of the polymer nanocomposite according to claims 1 to 3 for scavenging oxygen inside packaging.

5. The method of scavenging oxygen inside packaging based on the polymer nanocomposite of claim 1 wherein zero-valent iron doped with boron is obtained in a reaction of iron salt reduction with sodium borohydride in a reaction with the following conditions:
• the molar ratio of the iron salt to NaBH₄ is 1:3 with the stoichiometric excess of sodium borohydride relative to the iron salt in the amount between 30 and 50% is used,
• the reagent concentrations are:
- iron salt between 0.01 and 0.05 M,
- NaBH₄ between 0,05 and 0.2 M,
• the NaBH₄ solution is dropped into the iron salt solution at a rate corresponding to 3.5 to 5.5 parts by weight /min./100 g.a. Fe,
• the reaction is conducted in a deoxidised neutral gas atmosphere,
• the reaction is conducted at a room temperature, then, after dropping in the whole sodium borohydride, heated to between 70°C and 90°C, and cooled, and introducing boron doped zero-valent iron in an amount that corresponds to 5 to 50% of the excess relative to the stoichiometric free oxygen content in the packaging and the amount which can permeate through the packaging material during storage.

6. The method according to claim 5 wherein boron doped zero-valent iron is obtained in a reduction reaction with the reagent concentrations:
- iron salt 0.02 M
- NaBH₄ 0.2 M.

7. The method according to claim 5 or 6 wherein zero-valent nanoiron doped with boron is obtained in a reduction reaction in which a NaBH₄ solution is dropped into the iron salt solution at a rate corresponding to 4.5 parts by weight /min./100 g.a. Fe.

8. The method according to any of the claims from 5 to 7 wherein the polymer nanocomposite contains a polymer selected from the group: silicone rubbers, polysiloxanes, modified cellulose acetate butyrate, polyamide, polyvinyl alcohol, poly(ethylene terephthalate), cellulose derivatives, modified starch and biodegradable polymers or mixtures of these polymers, silicone rubbers or that the polymer nanocomposite contains a biodegradable polymer from the group: polylactic acid, polyhydroxybutyrate, polyoxymethylene or mixtures of these polymers.

9. The method according to any of the claims from 5 to 8 wherein the polymer nanocomposite contains boron doped zero-valent iron dispersed in polymer matrixe in the amount between 1 and 20% weight ratio relative to the polymer.

10. The method according to claim 5 wherein FeCl₃ is used as starting material.

11. Oxygen scavenger containing the polymer nanocomposite of claim 1.

12. The oxygen scavenger according to claim 11 wherein the polymer nanocomposite contains a polymer selected from the group: silicone rubbers, polysiloxanes, modified cellulose acetate butyrate, polyamide, polyvinyl alcohol, poly(ethylene terephthalate), cellulose derivatives, modified starch and biodegradable polymers or mixtures of these polymers, preferably silicone rubbers or the polymer nanocomposite contains a biodegradable polymer from the group: polylactic acid, polyhydroxybutyrate, polyoxymethylene or mixtures of these polymers.

13. The oxygen scavenger according to any of the claims from 11 to 12 wherein the polymer nanocomposite contains boron doped zero-valent iron dispersed in polymer matrixe in the amount between 1 and 20% weight ratio relative to the polymer.

14. A use of the oxygen scavenger according to any of the claims from 11 to 13, for scavenging oxygen inside packaging, wherein it is applied in the amount corresponding to 5 to 10% of the excess relative to the stoichiometric free oxygen content in the packaging and the amount which can permeate through the packaging material during storage.

## Patentansprüche

1. Das Polymer-Nanoverbundstoff ist **dadurch gekennzeichnet, dass** es ein Polymer und 1 bis 50 Gew.% Nanoeisen bezogen auf dem Polymer enthält, wobei das Nanoeisen ein Bordotiertes nullwertiges Eisen ist, und Borgehalt zwischen 0,01 und 10 Gew.% liegt.

2. Polymer-Nanoverbundstoff nach einem der Ansprüche von 1, enthaltend ein Polymer, ausgewählt aus der Gruppe: Siliconkautschuke, Polysiloxane, modifiziertes Celluloseacetatbutyrat, Polyamid, Polyvinylalkohol, Polyethylenterephthalat, Cellulosederivate, modifizierte Stärke und biologisch abbaubare Polymere oder Mischungen von diesen Polymeren, vorzugsweise Silikonkautschuke, oder es enthält ein biologisch abbaubares Polymer aus der Gruppe: Polymilchsäure, Polyhydroxybutyrat, Polyoxymethylen oder Mischungen von diesen Polymeren.

3. Polymer-Nanoverbundstoff nach einem der Ansprüche 1 bis 2, enthaltend ein Bordotiertes nullwertiges Eisen, das in einer Polymermatrix in einer Menge zwischen 1 und 20 Gew.% bezogen auf dem Polymer dispergiert ist.

4. Verwendung des Polymer-Nanoverbundstoffs nach den Ansprüchen 1 bis 3 zum Abfangen von Sauerstoff innerhalb einer Verpackung.

5. Verfahren zum Abfangen von Sauerstoff innerhalb einer Verpackung auf der Basis des Polymer-Nanoverbundstoffs nach Anspruch 1, wobei das Bor-dotierte nullwertige Eisen in einer Reaktion einer Eisensalz-Reduktion mit Natriumborhydrid in einer Reaktion mit den folgenden Bedingungen erhalten wird:
• ein Molverhältnis des Eisensalzes zu NaBH₄ beträgt 1:3 mit einem verendeten stöchiometrischen Überschuss an Natriumborhydrid bezogen auf dem Eisensalz in der Menge zwischen 30 und 50%,
• Die Reagenzkonzentrationen sind:
- das Eisensaltz zwischen 0,01 und 0,05 M,
- NaBH₄ zwischen 0,05 und 0,2 M,
• die NaBH₄ Lösung wird in die Eisensalzlösung mit einer Rate entsprechend 3,5 bis 5,5 Gewichtsteile/Min./100 g.a. Fe getropft,
• die Reaktion wird in einer desoxidierten neutralen Gasatmosphäre durchgeführt,
• die Reaktion wird bei Raumtemperatur durchgeführt, dann, nach dem Eintropfen des gesamten Natriumborhydrids, auf zwischen 70°C und 90°C erhitzt, und abgekühlt,
und Einführen von dem Bor-dotierten nullwertigen Eisen in einer Menge, entsprechend 5 bis 50% des Überschusses relativ zu dem stöchiometrischen Gehalt an freiem Sauerstoff in der Verpackung und einer Menge, die während der Lagerung durch das Verpackungsmaterial durchdringen kann.

6. Verfahren nach Anspruch 5, wobei das Bor-dotierte nullwertige Eisen in einer Reduktionsreaktion mit den Reagenzkonzentrationen erhalten wird:
- das Eisensalz 0,02 M
- NaBH₄ 0,2 M.

7. Verfahren nach Anspruch 5 oder 6, wobei das Bor-dotierte nullwertige Nanoeisen in einer Reduktionsreaktion erhalten wird, in der die NaBH₄-Lösung in die Eisensalzlösung mit einer Rate entsprechend 4,5 Gewichtsteile/Min./100 g.a. Fe getropft wird.

8. Verfahren nach einem der Ansprüche 5 bis 7, wobei das Polymer-Nanoverbundstoff ein Polymer enthält, das aus der Gruppe ausgewählt ist: Siliconkautschuke, Polysiloxane, modifiziertes Celluloseacetatbutyrat, Polyamid, Polyvinylalkohol, Polyethylenterephthalat, Cellulosederivate, modifizierte Stärke und biologisch abbaubare Polymere oder Mischungen von diesen Polymeren, Silikonkautschuke, oder es enthält ein biologisch abbaubares Polymer aus der Gruppe: Polymilchsäure, Polyhydroxybutyrat, Polyoxymethylen oder Mischungen von diesen Polymeren.

9. Verfahren nach einem der Ansprüche 5 bis 8, wobei das Polymer-Nanoverbundstoff das Bor-dotierte nullwertige Eisen enthält, das in einer Polymermatrix in einer Menge zwischen 1 und 20 Gew.% bezogen auf dem Polymer dispergiert ist.

10. Verfahren nach Anspruch 5, wobei FeCl₃ als Ausgangsmaterial verwendet wird.

11. Sauerstofffänger, enthaltend das Polymer-Nanoverbundstoff nach Anspruch 1.

12. Sauerstofffänger nach Anspruch 11, wobei das Polymer-Nanoverbundstoff ein Polymer enthält, ausgewählt aus der Gruppe: Siliconkautschuke, Polysiloxane, modifiziertes Celluloseacetatbutyrat, Polyamid, Polyvinylalkohol, Polyethylenterephthalat, Cellulosederivate, modifizierte Stärke und biologisch abbaubare Polymere oder Mischungen von diesen Polymeren, vorzugsweise Silikonkautschuke oder das Polymer-Nanoverbundstoff enthält ein biologisch abbaubares Polymer aus der Gruppe: Polymilchsäure, Polyhydroxybutyrat, Polyoxymethylen Mischungen von diesen Polymeren.

13. Sauerstofffänger nach einem der Ansprüche 11 bis 12, wobei das Polymer-Nanoverbundstoff das Bor-dotierte nullwertige Eisen enthält, das in einer Polymermatrix in einer Menge zwischen 1 und 20 Gew.% bezogen auf das Polymer dispergiert ist.

14. Verwendung des Sauerstofffängers nach einem der Ansprüche 11 bis 13 zum Abfangen von Sauerstoff innerhalb von einer Verpackung, wobei er in einer Menge entsprechend 5 bis 10% des Überschusses bezogen auf dem stöchiometrischen Gehalt an freiem Sauerstoff in der Verpackung aufgebracht wird und einer Menge, die während der Lagerung durch das Verpackungsmaterial durchdringen kann.

## Revendications

1. Polymère nanocomposite, **caractérisé en ce qu'**il contient un polymère et par 1 à 50% parties en poids de nanofer par rapport au polymère, où le nanofer est du fer zéro-valent dopé au bore et sa teneur en bore est compromise entre 0.01 et 10% en poids.

2. Polymère nanocomposite selon l'une quelconque des revendications 1, comprenant un polymère choisi appartenant au groupe: caoutchoucs de silicone, polysyloxanes, acétate-butyrate de cellulose modifiée, polyamide, alcool polyvinylique, poly(téréphtalate d'éthylène), dérivés de la cellulose, amidon modifié et polymères biodégradables ou des mélanges de ces polymères, de préférence des caoutchoucs de silicone, ou contenant un polymère biodégradable appartenant au groupe: acide polylactique, polyhydroxybutyrate, polyoxyméthylène ou des mélanges de ces polymères.

3. Polymère nanocomposite selon l'une quelconque des revendications 1 et 2, comprenant du fer zéro-valent dopé au bore dispersé dans une matrice polymère dans une quantité comprise entre 1 et 20% en rapport pondéral relatif à ce polymère.

4. Utilisation d'un polymère nanocomposite selon les revendications de 1 à 3 pour le piégeage d'oxygène à l'intérieur de l'emballage.

5. Procédé de piégeage d'oxygène à l'intérieur de l'emballage sur la base du polymère nanocomposite de la revendication 1, où le fer zéro-valent dopé au bore est obtenu dans une réaction de réduction du sel de fer avec du borohydrure de sodium dans une réaction effectuée dans les conditions suivantes:
• Le rapport molaire du sel de fer par rapport à NaBH₄ est égal à 1:3 avec un excès stoechiométrique de borohydrure de sodium par rapport au sel de fer dans une quantité comprise entre 30 et 50%,
• Les concentrations de réactifs sont:
- Du sel de fer, entre 0.001 et 0.05 M,
- De NaBH₄, entre 0.05 et 0.2 M,
• La solution NaBH₄ est introduite goutte à goutte dans la solution de sel de fer à une vitesse correspondant à 3.5 à 5.5 parties en poids/min./100 atomes-grammes Fe,
• La réaction est conduite dans une atmosphère de gaz neutre désoxydé,
• La réaction est conduite dans une température ambiante, puis, après l'addition de tout le borohydrure de sodium, elle est chauffée jusqu'à entre 70°C et 90°C, et ensuite refroidie,
et l'introduction du fer zéro-valent dopé au bore dans une quantité qui correspond à 5 à 50% de l'excès relatif à la teneur stoechiométrique d'oxygène libre dans l'emballage et la quantité qui peut traverser par le matériau d'emballage pendant le stockage.

6. Procédé selon la revendication 5, où le fer zéro-valent dopé au bore est obtenu dans une réaction de réduction avec les concentrations de réactifs suivants:
- Sels de fer 0.02 M
- NaBH₄ 0.2 M.

7. Procédé selon la revendication 5 ou 6, où le nanofer zéro-valent dopé au bore est obtenu dans une réaction de réduction dans laquelle la solution NaBH₄ est introduite goutte à goutte dans la solution de sel de fer à une vitesse correspondant à 4.5 parties en poids/min./100 atomes-grammes Fe.

8. Procédé selon l'une quelconque des revendications de 5 à 7, où le polymère nanocomposite comprent un polymère choisi appartenant au groupe: caoutchoucs de silicone, polysyloxanes, acétate-butyrate de cellulose modifiée, polyamide, alcool polyvinylique, poly(téréphtalate d'éthylène), dérivés de la cellulose, amidon modifié et polymères biodégradables ou des mélanges de ces polymères, des caoutchoucs de silicone, ou que le polymère nanocomposite contient un polymère biodégradable appartenant au groupe: acide polylactique, polyhydroxybutyrate, polyoxyméthylène ou des mélanges de ces polymères.

9. Procédé selon l'une quelconque des revendications de 5 à 8, où le polymère nanocomposite contient du fer zéro-valent dopé au bore dispersé dans une matrice polymère dans une quantité comprise entre 1 et 20% en rapport pondéral relatif à ce polymère.

10. Procédé selon la revendication 5, où FeCl₃ est utilisé comme matière première.

11. Piégeur d'oxygène contenant le polymère nanocomposite de la revendication 1.

12. Piégeur d'oxygène selon la revendication 11, où le polymère nanocomposite contient un polymère choisi appartenant au groupe: caoutchoucs de silicone, polysyloxanes, acétate-butyrate de cellulose modifiée, polyamide, alcool polyvinylique, poly(téréphtalate d'éthylène), dérivés de la cellulose, amidon modifié et polymères biodégradables ou des mélanges de ces polymères, de préférence des caoutchoucs de silicone, ou que le polymère nanocomposite contient un polymère biodégradable appartenant au groupe: acide polylactique, polyhydroxybutyrate, polyoxyméthylène ou des mélanges de ces polymères.

13. Piégeur d'oxygène selon l'une quelconque des revendications de 11 à 12, où le polymère nanocomposite contient du fer zéro-valent dopé au bore dispersé dans une matrice polymère dans une quantité comprise entre 1 et 20% en rapport pondéral relatif à ce polymère.

14. Utilisation d'un piégeur d'oxygène selon l'une quelconque des revendications de 11 à 13 pour le piégeage d'oxygène à l'intérieur de l'emballage, où il est appliqué dans une quantité correspondant de 5 à 10% de l'excès relatif à la teneur stoechiométrique d'oxygène libre dans l'emballage et la quantité qui peut traverser par le matériau d'emballage pendant le stockage.
